Europäisches Patentamt

European Patent Office

Office européen des brevets

(11) Publication number: **0 143 505**
**B1**

# (12) EUROPEAN PATENT SPECIFICATION

(45) Date of publication of patent specification: **02.03.88**

(51) Int. Cl.⁴: **A 01 K 45/00**

(21) Application number: **84201737.8**

(22) Date of filing: **27.11.84**

(54) Device for packing poultry in boxes or containers.

(30) Priority: **28.11.83 NL 8304074**

(43) Date of publication of application:
**05.06.85 Bulletin 85/23**

(45) Publication of the grant of the patent:
**02.03.88 Bulletin 88/09**

(84) Designated Contracting States:
**AT BE CH DE FR GB IT LI LU NL SE**

(56) References cited:
**US-A-3 785 349**
**US-A-3 921 588**

(73) Proprietor: **van den Brink, Hendrikus Gerrit**
**Edeseweg 111**
**NL-6732 DA Harskamp (NL)**

(72) Inventor: **van den Brink, Hendrikus Gerrit**
**Edeseweg 111**
**NL-6732 DA Harskamp (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

## Description

The invention relates to device for packing poultry in boxes or containers, comprising a pick-up device with an endless conveyor, which runs over reverse wheels with horizontal axis, said conveyor having a part beginning near the floor and running upwards, which conveyor is provided with spaced apart series of forwardly projecting fingers with openings between them in each serie and which are attached to the conveyor in such a way that in the up going part of the conveyor they are facing away from the conveyor, in the down going part are retracted and near the floor the forwardly moving part moves substantially parallel to the floor, said device further comprising a conveyor belt outside the track of the fingers and receiving poultry behind the reversing top portion of the conveyor, as well as a longitudinally extending conveyor receiving poultry from the transversely extending conveyor belt and feeding said poultry to a feed regulating and discharging device followed by a container or box conveyor.

A device of this type is known from US—A—3921588.

In this known device the pick-up device comprises to spaced apart endless chains to which are pivotally connected transversely extending bars having pick-up fingers extending in one direction and at the end of the bars leavers with guide rolls which run inside guide tracks. During movement in one direction of the endless chains the guide tracks define the position of the pick-up fingers such that in the up going part the fingers are directed forwardly to pick up and carry poultry. At the top of said up going part which means at the reversing wheel of the chains the guide track withdraws the pick-up fingers due to which the poultry from the top of the pick-up device drops onto a transversely moving conveyor belt. This dropping down is a disadvantage. The poultry, loosing support due to the retraction of the fingers tries to fly and by being prevented from escaping will drop down on the conveyor with the risk not landing on their feet.

At the lower end of the pick-up device the endless chains and the guide track cross each other to move the pick-up fingers outwardly and forwardly for picking up a next row of poultry.

The fingers are not forced against the door so that in the case of an uneven floor the risk exists that the front end of the pick-up fingers is too high above the floor level to properly pick-up poultry.

The co-operation between the endless chains and the guide tracks leads to vibrations which risk is increased in case the guide tracks accumulate dirt or are insufficiently maintained. Vibrations of the pick-up fingers are felt by the poultry which poultry is alarmed.

The construction of that known pick-up device is complicated.

Purpose of the invention is to provide a device of more simple construction, quiet operation and without the disadvantages of the known device in respect of unproper picking up of the poultry and sudden discharge at the top.

According to the invention this purpose is achieved in that the fingers are free hingedly connected to the conveyor in such a way that in the up going part they are held by a stop in an approximately horizontal position facing away from the conveyor and in the down part can swing downwardly against the conveyor and by having near the bottom reverse wheel of the conveyor a curved guide element which guides the downwardly hanging fingers forwardly towards the floor which they engage by their own weight, and in that above the upper reverse wheel guide cams have been provided which grip between the fingers and extend towards the transversely extending conveyor belt.

Due to the fact that the pick-up fingers swing freely they always are in proper contact with the floor prior to picking up poultry.

Due to the guide cams at the top the poultry moved upwardly by the fingers receives support from the guide tracks at the moment that the fingers no longer should be used for supporting the poultry. Said guide track can have a shape such that the supported poultry is gently guided upon the transverse conveyor. Moreover, its length and shape be such that the pick-up fingers can swing downwardly about their pivot point during the down going movement that fingers being picked up by a guide in the lower portion of the down going part to be guided forwardly for subsequent engagement with the floor by their own weight. This construction is simple, and reliable and does not lead to vibrations so that the poultry picked up is guided in a more quiet way towards the further transportation and distribution and loading means.

It is desirable according to the invention that the conveyor has a lower part near the floor gradually running towards it and for the guide plate to follow this part preferably in the shape of a curve. This whole pick-up device can be disposed adjustably on a mobile under frame which provided with the feed regulating device and the container or box conveyor so that adjustment to floor height and the like is possible.

According the the invention, the feed regulating device preferably consists of a rotatable disc into which the conveyor belt leads, and which is provided with a revolving wall with outlet opening on the side facing the container conveyor, said outlet opening being provided with a moveable door, and there being a slide plate located between the outlet opening and the edge of a container. A quantity of poultry is assembled on the disc and is carried portion wise via the opening when the door is opened and via the slide plate connected therewith to a container or box. When a container or box is full, it is pushed on and replaced by another, which can take place using horizontal conveyors or a destacking and stacking device.

The device is preferably designed in such a away that the wall with door is rotatable about the axis of rotation of the disc and the slide plate extends over the width of the range of rotation of the wall opening.

This means that when the door is opened the feed regulating device can deliver a stream of poultry onto the slide plate which conveys them over the whole width of the container or box.

It is, of course, also possible for the wall to have two openings with accompanying doors, and for each opening to connect to a slide plate to the container.

The design of the door can be such that it consists of two parts which are hingedly connected to each other, one of which when viewed in the direction of rotation of the disc passed the opening is hingedly connected to the wall, while the second is hingedly connected to the edge of the first part facing away from the wall, and is held by a spring in an angular position in relation to the first part, and there are means for moving the door away from or towards the opening in such a way that the second part, on contact with the wall at a point before the opening, slides over the wall against the direction of rotating during the closing movement. This means that each time the door closes the birds are moved away from the opening and therefore cannot become jammed in it.

The poultry, which is lifted by means of the pick-up device and is carried to a conveyor belt, can be taken to a conveyor device consisting of two transverse belts which connect with the discharge end of the cams and whose working faces move towards each other and lead to a belt situated between them which conveys away from the cam in the direction of the feed regulating disc. The stream of poultry which is delivered each time a series of fingers is then carried in concentrated form to the central belt which takes it to the feed regulating device.

The invention will now be explained in greater detail with reference to the drawings.

Fig. 1 shows a side view of an embodiment of the device according to the invention and

Fig. 2 shows a top view of the embodiment of Fig. 1.

The device shown in the drawings consists of an underframe 1 with wheels 2.

This underframe carries on its front side a frame 3, which at 4 is hingedly connected about a horizontal axis to the underframe 1 and is adjustable in height by means of the hydraulic cylinder 5, for example for passing thresholds and the like. This frame can also rest on the floor 7 on wheels 6.

The frame 3 consists of a number of polygonal frame parts, positioned in vertical planes and each consisting of the upgoing parts 8, the horizontal parts 9 and 10, and three parts 11, 12 and 13 standing at an angle to each other.

Supported in or near the corners of these polygonal parts are reverse rolls, indicated by 14, 15, 16, 17 and 18, over which runs an endless belt 19.

Instead of rolls, it is, of course, also possible to use chain wheels, over which run endless chains which are linked together in the transverse direction.

Attached on this endless belt 19 or on the chains are series of fingers 20 which at 21 are hingedly connected to the belt or chain and are supported by an angle section 22. This support is given in the upgoing part which is located between the reverse rolls or wheels 14 and 15.

After passing the roll 16, the fingers 20 can, however, swing downwards, as shown, and after passing the rolls 17 and 18 and being guided by the plate 23 they are taken by force of gravity against the floor 7 and from there slide horizontally over the floor from roll 18 to roll 14.

A large quantity of poultry can be picked up by the fingers 20 sliding over the floor, and it is then carried up, in the process the guide plate 24 on the outside of the upgoing part ensuring that the birds cannot escape from their support on the fingers 20.

Near the top reverse wheel 15 the guiding is taken over by a cam 25 which projects into the openings between the fingers, which during the movement from the reserve roll 15 to the reverse roll 16 still support the conveyance of the poultry over the cam 25, but which then fall down so that the poultry slides over the sloping part 26 of the cam 25 onto a conveyor belt.

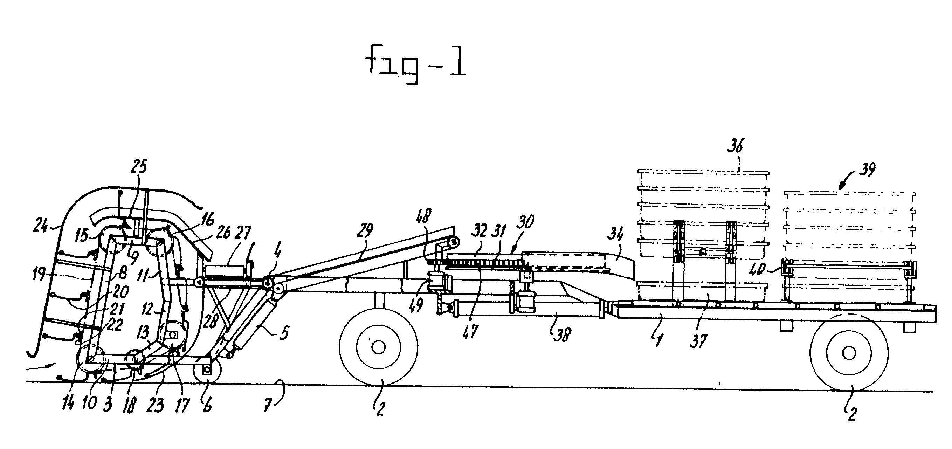

This picking up is preferably carried out in twilight or in the dark. The conveyor belts 27 run crosswise towards each other to a conveyor belt 28 which runs in the longitudinal direction and leads to an upgoing conveyor belt 29, which leads to a feed-regulating device which in the general sense is indicated by 30 and consists of a rotatable disc 31 and a stationary revolving wall 32 which is provided with a discharge opening 33. At the discharge opening there is a guide plate 34, the discharge edge 35 of which corresponds to the width of a container 36. The containers 36 are in a stack, as shown in Fig. 1, and in a manner known per se an empty container can be removed each time from the stack and taken to the position indicated by 37. When the container 37 has been filled, it can be pushed up to the right by the cylinder 38 in Fig. 1, where a new stack 39 of full containers is formed in a known way with vertically upward and downward moving ratchet mechanisms 40, which can always lift the bottom container by gripping a rim flange.

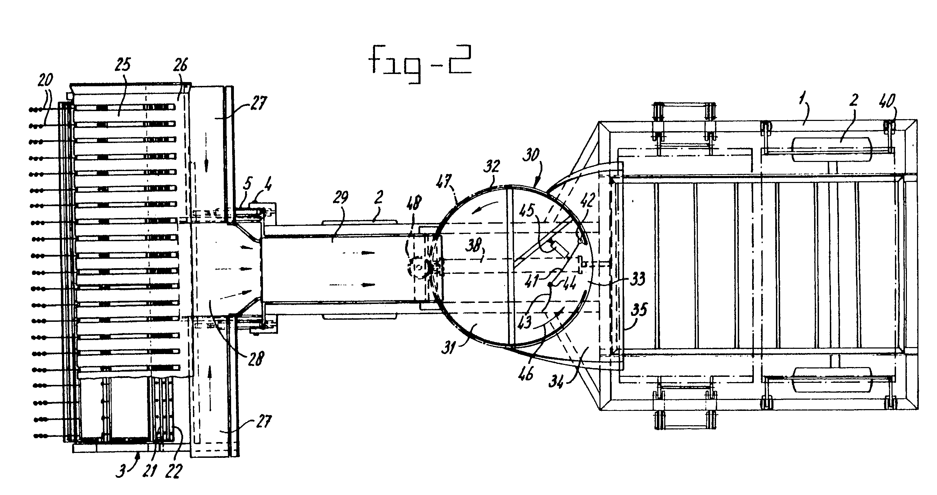

The feed-regulating device 30 is provided at the discharge opening 33 with a door, comprising a first part 41 which at 42 is hingedly connected to the wall 32, and a part 43 which at 44 is hingedly connected to the first part 41 and is held by a spring in an angular position in relation to the part 41. At 45 there is a cylinder with which this door 41, 43 can be opened or closed. Fig. 2 shows the door in the open position, so that a quantity of poultry can be discharged via the opening 33. If the door is shut, the part 43 moves against the wall 32 and in the process will make a pivoting movement in relation to the part 41, so that this part 43 slides along the inside of the wall 32 in the opposite direction to the direction of rotation of the disc 31 indicated by the arrow 46. This prevents birds from being jammed.

The wall 32 is provided on its outer periphery with a crown gear 47 which can be engaged by a gear wheel 48 which is connected to a motor 49. By rotating the wall 32 and thus the opening 33, it is now possible when the door is open to achieve distribution of a series of birds over the width of the slide plate 34 and thus of a container 36.

Instead of one single discharge opening 33, it is, of course, also possible to provide the feed-regulating device with several discharge openings which lead via slide tracks to containers.

The container conveyance takes place here by destacking from a stack and stacking full containers. It is, of course, also possible to use only horizontal conveyance of the containers to the underframe 1 and, if necessary, to carry out the stacking elsewhere, and it is also possible to do the conveyance of the containers by hand.

**Claims**

1. Device for packing poultry in boxes or containers (37), comprising a pick-up device provided with an endless conveyor (19), which runs over reverse wheels (14, 15, 16, 17, 18) with horizontal axes said conveyor having a part beginning near the floor (7) and running upwards, which conveyor is provided with spaced apart series of forwardly projecting fingers (20) with openings between them in each serie and which are attached to the conveyor (19) in such a way that in the up going part of the conveyor they are facing away from the conveyor, in the down going part are retracted and near the floor the forwardly moving parts moves substantially parallel to the floor, said device further comprising a conveyor belt (27) outside the track of the fingers and receiving poultry behind the reversing top portion of the conveyor (19), as well as a longitudinally extending conveyor (29) receiving poultry from the transversely extending conveyor belt (27) and feeding said poultry to a feed regulating and discharging device (30) followed by a container or box conveyor (36,37), characterized in that the fingers (20) are free hingedly connected to the conveyor (19) in such a way that in the up going part they are held by a stop (22) in an approximately horizontal position facing away from the conveyor (19) and in the down going part can swing downwardly against the conveyor (19) and by having near the bottom reverse wheel of the conveyor (19) a curved guide element (23) which guides the downwardly hanging fingers (20) forwardly towards the floor which they engage by their own weight, and that above the upper reserve wheel (15-16) guide cams (25) have been provided which grip between the fingers (20), and extend towards the transversely extending conveyor belt (27).

2. Device according to claim 1 characterized in that the conveyor (19) has a lower part near the floor gradually running towards it.

3. Device according to one or more of the preceding claims characterized in that the pick up device with conveyor is located in a frame (3) which can be adjusted in height and which is attached to a mobile under frame (1), in which the feed regulating device (30) and the container conveyor are disposed.

4. Device according to one or more of the preceding claims characterized in that the feed regulating device (30) comprises a rotatable disk (31) below the discharge end of the conveyor belt (29) and which is provided with an endless wall (32) with outlet opening (33) at the side facing the container conveyor (36), said outlet opening (33) being provided with a movable door (41,43), and there being a slide plate (34) located between the outlet opening (33) and the edge of a container (36).

5. Device according to claim 4 characterized in that the wall (32) with door (41,43) is rotatable about the axes of rotation of the disc and the slide plate (34) extends over the width of the range of rotation of the wall opening (33).

6. Device according to claim 4 characterized in that the wall has more than one opening with accompanying doors, and each opening connects with a slide plate to a container.

7. Device according to claim 4, 5 or 6 characterized in that the door consists of two parts (41,43) which are hingedly connected to each other, one of which (41), when viewed in the direction of rotation of the disc passed the opening is hingedly connected to the wall (32), while the second (43) is hingedly connected the edge of the first part (41) facing away from the wall, and is held by a spring in an angular position in relation to the first part, and there are means (45) for moving the door away from or toward the opening in such a way that the second part (43), on contact with the wall at a point before the opening (33), slides over the wall (32) against the direction of rotation during the closing movement.

8. Device according to one or more of the preceding claims, characterized in that the conveyor belt device between the pick-up device and the feed regulating disc consists of two transverse belts (27) which connect with the discharge end of the cam (25) and whose working faces moves towards each other and lead to a belt (29) situated between them, which conveys away from the cam (25) in the direction of the feed regulating disc (30).

**Patentansprüche**

1. Vorrichtung zum Verpacken von Geflügel in Kisten oder Behälter (37), umfassend eine Abnahmevorrichtung mit einem Endlosförderer (19), der um Umlenkräder (14, 15, 16, 17, 18) mit waagerechten Achsen umläuft und der ein nahe dem Boden (7) beginnendes und nach oben laufendes Trum aufweist, wobei der Förderer mit voneinander beabstandeten. Reihen von nach vorn ragenden Fingern (20) mit zwischen diesen in jeder Reihe festgelegten Öffnungen versehen ist, welche Finger so am Förderer (19) angebracht sind, daß sie im Aufwärtstrum des Förderers von diesem hinweg ragen und im Abwärtstrum eingezogen oder eingeklappt werden und in der Nähe des Bodens sich das vorwärts laufende Trum praktisch parallel zum Boden bewegt, wobei die Vorrichtung ferner umfaßt: ein außerhalb der Bewegungsbahn der Finger liegendes und das Geflügel hinter dem oberen Umlenkabschnitt des Förderers (19) abnehmendes Förderband (27) sowie einen längsverlaufenden Förderer (29), welcher das Geflügel vom querverlaufenden Förderband (27) abnimmt und das Geflügel zu einer von einem Behälter- oder Kistenförderer (36, 37) gefolgten Zufuhrregel- und Austragvorrichtung (30) überführt, dadurch gekennzeichnet, daß die Finger (20) frei angelenkt so mit dem Förderer (19) verbunden sind, daß sie im Aufwärtstrum durch einen Anschlag (22) in einer etwa waagerechten, vom Förderer (19) hinweg ragenden Lage gehalten werden und im Abwärtstrum abwärts gegen den Förderer (19) zu schwingen vermögen, wobei nahe dem bodenseitigen Umlenkrad des Förderers (19) ein gekrümmtes Leitelement (23) vorgesehen ist, welches die herabhängenden Finger (20) vorwärts zum Boden führt, an den sie sich unter ihrem Eigengewicht anlegen, und daß über dem oberen Umlenkrad (15-16) Leitkurven (25) vorgesehen sind, welche zwischen die Finger (20) eingreifen und sich in Richtung auf das querverlaufende Förderband (27) erstrecken.

2. Vorrichtung nach Anspruch 1, dadurch gekennzeichnet, daß der Förderer (19) ein nahe dem Boden liegendes, allmählich zum Boden hin verlaufendes unteres Trum aufweist.

3. Vorrichtung nach einem oder mehreren der vorangehenden Ansprüche, dadurch gekennzeichnet, daß die Abnahmevorrichtung mit Förderer in einem Rahmen (3) angeordnet ist, der in seiner Höhe einstellbar und an einem mobilen Untergestell (1), in welchem die Zufuhrregelvorrichtung (30) und der Behälterförderer angeordnet sind, angebracht ist.

4. Vorrichtung nach einem oder mehreren der vorangehenden Ansprüche, dadurch gekennzeichnet, daß die Zufuhrregelvorrichtung (30) eine drehbare Scheibe (31) aufweist, die unter dem Austragende des Förderbands (29) angeordnet und mit einer endlosen Wand (32) mit Auslaßöffnung (33) an der dem Behälterförderer (36) zugewandten Seite versehen ist, die Auslaßöffnung (33) mit einer bewegbaren Tür (41, 43) versehen ist und zwischen der Auslaßöffnung (33) und der Kante eines Behälters (36) eine Gleitplatte (34) angeordnet ist.

5. Vorrichtung nach Anspruch 4, dadurch gekennzeichnet, daß die Wand (32) mit Tür (41, 43) um die Drehachse der Scheibe drehbar ist und die Gleitplatte (34) sich über die Breite des Drehbewegungsbereichs der Wand-Öffnung (33) erstreckt.

6. Vorrichtung nach Anspruch 4, dadurch gekennzeichnet, daß die Wand mehr als eine Öffnung mit zugeordneten Türen aufweist und jede Öffnung mittels einer Gleitplatte mit einem Behälter verbunden ist.

7. Vorrichtung nach Anspruch 4, 5 oder 6, dadurch gekennzeichnet, daß die Tür aus zwei Teilen (41,43) besteht, die gelenkig miteinander verbunden sind und von denen der eine Teil (41), in Drehrichtung der Scheibe an der Öffnung vorbei gesehen, gelenkig mit der Wand (32) verbunden ist, während der zweite Teil (43) an der von der Wand abgewandten Kante des ersten Teils (41) angelenkt und durch eine Feder in einer Winkelstellung zum ersten Teil gehalten ist, und daß Mittel (45) zum Bewegen der Tür von der Öffnung hinweg oder auf diese zu in der Weise, daß der zweite Teil (43), in Berührung mit der Wand an einer Stelle vor der Öffnung (33), während der Schließbewegung gegen die Drehrichtung über die Wand (32) gleitet, vorgesehen sind.

8. Vorrichtung nach einem oder mehreren der vorangehenden Ansprüche, dadurch gekennzeichnet, daß die Förderbandvorrichtung zwischen der Abnahmevorrichtung und der Zufuhrregelscheibe aus zwei Querförderbändern (27) besteht, die mit dem Austragende der Leitkurve (25) verbunden sind und deren Arbeitsflächen sich aufeinander zu bewegen und zu einem zwischen ihnen angeordneten Band (29) führen, das von der Leitkurve (25) hinweg in Richtung auf die Zufuhrregelscheibe (30) fördert.

## Revendications

1. Dispositif pour emballer des volailles dans des boîtes ou conteneurs (37), comprenant un dispositif de prélèvement muni d'un convoyeur sans fin (19) qui passe autour de roues de renvoi (14, 15, 16, 17, 18) à axes horizontaux, ledit convoyeur comprenant une partie commençant à proximité du sol (7) et s'étendant vers le haut, lequel convoyeur est muni de séries espacées de doigts (20) faisant saillie vers l'avant, avec des ouvertures entre eux dans chaque série et qui sont fixés au convoyeur (19) de manière que dans la partie montante du convoyeur ils soient tournés à l'opposé du convoyeur, que dans la partie descendante ils soient rétractés et qu'à proximité du sol la partie se déplaçant vers l'avant se déplace sensiblement parallèlement au sol, ledit dispositif comprenant en outre une courroie transporteuse (27) à l'extérieur du parcours suivi par les doigts et recevant des volailles à l'arrière de la partie supérieure de renvoi du convoyeur (19), ainsi qu'un convoyeur (29) s'étendant longitudinalement et recevant les volailles de la courroie transporteuse (27) qui s'étend transversalement et envoyant lesdites volailles à un dispositif de régulation d'alimentation et de décharge (30) suivi par un convoyeur de conteneurs ou de boîtes (36, 37), caractérisé en ce que les doigts (20) sont reliés à charnière de façon libre au convoyeur (19) de manière que dans la partie montante ils soient maintenus par une butée (22) dans une position approximativement horizontale tournée à l'opposé du convoyeur (19) et que dans la partie descendante ils puissent pivoter vers le bas contre le convoyeur (19), et en ce qu'il comprend à proximité de la roue de renvoi du bas du convoyeur (19) un élément de guidage courbe (23) que guide les doigts (20) pendant vers le bas vers l'avant en direction du sol avec lequel ils viennent en contact par leur propre poids, et qu'au-dessus des roues de renvoi supérieures (15—16) sont prévues des cames de guidage (25) qui agissent entre les doigts (20) et s'étendent en direction de la courroie transporteuse (27) qui s'étend transversalement.

2. Dispositif selon la revendication 1, caractérisé en ce que le convoyeur (19) comprend une partie inférieure proche du sol qui se rapproche graduellement de ce dernier.

3. Dispositif selon une ou plusieurs des revendications précédentes, caractérisé en ce que le dispositif de prélèvement à convoyeur est disposé dans un bâti (3) que peut être adjusté en hauteur et que est relié à un sous-châssis mobile (1) dans lequel sont disposés le dispositif de régulation d'alimentation (30) et le convoyeur de conteneurs.

4. Dispositif selon une ou plusieurs des revendications précédentes, caractérisé en ce que le dispositif de régulation d'alimentation (30) comprend un disque rotatif (31) au-dessous de l'extrémité de décharge de la courroie transporteuse (29) et est muni d'une paroi sans fin (32) avec une ouverture de sortie (33) sur le côté qui fait face au convoyeur de conteneurs (36), ladite ouverture de sortie (33) étant munie d'une porte mobile (41, 43), et en ce qu'une plaque de glissement (34) est disposée entre l'ouverture de sortie (33) et le bord d'un conteneur (36).

5. Dispositif selon la revendication 4, caractérisé en ce que la paroi (32) comprenant la porte (41, 43) peut tourner autour de l'axe de rotation du disque, et la plaque de glissement (34) s'étend sur la largeur de la plage de rotation de l'ouverture (33) de la paroi.

6. Dispositif selon la revendication 4, caractérisé en ce que la paroi comprend plus d'une seule ouverture, avec des portes associées, et chaque ouverture est reliée par une plaque de glissement à un conteneur.

7. Dispositif selon la revendication 4, 5 ou 6, caractérisé en ce que la porte consiste en deux parties (41, 43) qui sont reliées l'une à l'autre par des charnières, dont l'une (41), quand on la regarde dans le sens de rotation du disque passant par l'ouverture, est reliée par une charnière à la paroi (32), alors que la seconde (43) est reliée par une charnière au bord de la première partie (41) qui est tourné à l'opposé de la paroi, et est maintenue par un ressort dans une position angulaire par rapport à la première partie, et en ce que sont prévus des moyens (45) pour éloigner et rapprocher la porte de l'ouverture de manière que la seconde partie (43), quand elle est en contact avec la paroi en un point situé avant l'ouverture (33), glisse sur la paroi (32) dans le sens contraire au sens de rotation pendant le mouvement de fermeture.

8. Dispositif selon une ou plusieurs des revendications précédentes, caractérisé en ce que le dispositif à courroie transporteuse entre le dispositif de prélèvement et le disque de régulation d'alimentation consiste en deux courroies transversales (27) qui sont reliées à l'extrémité de décharge de la came (25) et dont les faces de travail se déplacent en direction l'une de l'autre et conduisent à une courroie (29) située entre elles, qui effectue un transport s'éloignant de la came (25) en direction du disque de régulation d'alimentation (30).

fig-1

Fig-2